# EUROPÄISCHE PATENTSCHRIFT

(11) **EP 2 317 294 B1**
(45) Veröffentlichungstag und Bekanntmachung des Hinweises auf die Patenterteilung: **07.01.2015**
(21) Anmeldenummer: 10007566.2
(22) Anmeldetag: 21.07.2010
(51) Int. Cl.: G01L 9/00, G01L 19/04

(54) **Messzelle**
Measuring cell
Cellule de mesure

(30) Priorität: 02.11.2009 DE 102009051611
(43) Veröffentlichungstag der Anmeldung: 04.05.2011
(73) Patentinhaber: VEGA Grieshaber KG, 77709 Wolfach (DE)
(72) Erfinder: Gruhler, Holger, 78609 Tuningen (DE)
(74) Vertreter: Göhring, Robert

(56) Entgegenhaltungen:
- EP-A1- 0 259 494
- EP-A2- 0 210 843
- EP-A2- 0 649 011
- WO-A1-83/04308
- WO-A1-98/26261
- DE-A1- 3 839 515
- DE-A1- 4 227 819
- DE-T2-602004 009 609
- US-A1- 2004 099 061
- US-B1- 7 331 239

## Beschreibung

Die Erfindung betrifft eine Messzelle gemäß dem Oberbegriff des Patentanspruchs 1.

Aus dem Stand der Technik sind derartige Messzellen beispielsweise als Druckmesszellen zur kapazitiven Detektion eines extern an der Messzelle anliegenden Druckes bekannt. Eine solche kapazitive Druckmesszelle weist einen Grundkörper, und eine an dem Grundkörper angeordnete Messmembran auf, wobei an den zueinander gewandten Flächen der Messmembran und des Grundkörpers zur Bildung einer Kapazität flächige Elektroden angeordnet sind. Bei einer Druckeinwirkung auf die Messmembran ändert sich der Abstand zwischen der Messmembran und dem Grundkörper und damit die Kapazität des durch die Messelektroden gebildeten Kondensators, so dass eine Detektion des einwirkenden Druckes möglich ist.

Bei nach diesem Prinzip aufgebauten Messzellen ist es problematisch, dass es durch schnelle Temperaturänderungen, sogenannte Thermoschocks, beispielsweise einen Temperatursprung von 20°C auf 80°C, und aufgrund eines relativ langsamen Temperaturausgleichs innerhalb der Messzelle zu strukturmechanischen Verformungen der Messzelle kommt, die aufgrund einer daraus resultierenden Durchbiegung der Messmembran eine Änderung des Messwerts bewirken, obwohl keine Druckänderung stattfindet. Bei langsamen Temperaturänderungen gleichen sich die Temperaturniveaus durch Wärmeleitung über eine Glaslotverbindung zwischen der Messmembran und dem Grundkörper aus, so dass keine Verformungen der Messzelle und insbesondere der Messmembran verursacht werden. Bei schnellen Temperaturwechseln, wie sie beispielsweise bei einem Thermoschock auftreten, erfolgt der Temperaturausgleich zwischen Messmembran und Grundkörper körper jedoch erst nach längerer Zeit, so dass sich in Folge des Temperaturgradienten die Messmembran in Bezug zum Grundkörper verformt, sich die Kapazitätsverhältnisse im Inneren der Zelle ändern und eine Druckänderung vorgetäuscht wird.

Zur Kompensation solcher Fehlmessungen ist es aus dem Stand der Technik, beispielsweise aus der EP 1 186 875 B1, bekannt, in einer Glaslotverbindung, mittels der die Messmembran an dem Grundkörper angeordnet ist, einen Temperatursensor zur Erfassung von Temperaturänderungen anzuordnen. Durch diesen Temperatursensor wird es möglich, Temperaturänderungen mit steilem Temperaturgradienten und tatsächliche Druckänderungen zu unterscheiden und die ausgegebenen Messwerte mit Hilfe einer elektronischen Verarbeitung zu kompensieren.

Nach firmeninternem Stand der Technik wird außerdem versucht, anhand einer Biegelinie der Messmembran und der dadurch veränderten Kapazitätswerte einen erfolgten Thermoschock zu erkennen und den falschen Messwert anschließend zu korrigieren.

An den oben genannten Kompensationsmethoden ist es jedoch nachteilig, dass das Vorliegen eines Thermoschocks erst anhand falscher Messwerte erkannt wird und daher eine sehr schnelle Signalverarbeitung für die Messwerte notwendig ist. Problematisch ist außerdem, dass es nicht möglich ist, zeitlich überlagerte Ereignisse, wie z. B. die Überlagerung eines Druckstoßes mit einem Thermoschock, zuverlässig zu erkennen und zu verarbeiten.

Bekannt sind auch Messzellen, beispielweise aus EP 0 210 843 A1, WO 98/26261, US 2004/0099061 A1 oder EP 0 259 494 A1, die eine Zwischenmembran aufweisen, um parasitäre physikalische Einflüsse zu eliminieren und damit eine bessere Empfindlichkeit zu erlangen.

Es ist die Aufgabe der Erfindung eine Messzelle der oben genannten Art derart weiterzubilden, dass die Auswirkungen von Thermoschocks und daraus resultierende Messfehler reduziert werden.

Diese Aufgabe wird gelöst durch eine Messzelle mit den Merkmalen des Patentanspruchs 1.

Bevorzugte Weiterbildungen dieser Messzelle sind Gegenstand der Unteransprüche.

Eine erfindungsgemäße Messzelle weist einen Grundkörper, eine Messmembran die an dem Grundkörper angeordnet ist und eine Messeinrichtung mit einem ersten Messelement und einem zweiten Messelement auf, wobei das erste Messelement an der Messmembran angeordnet ist und eine Zwischenmembran vorgesehen ist, die zwischen der Messmembran und dem Grundkörper angeordnet ist und an der das zweite Messelement angeordnet ist, wobei die Messelemente Messelektroden sind, die Messelektroden als gleichgroße, flächige Metallisierungen ausgebildet sind und eine Messkapazität bilden und die Messelektroden zentrisch angeordnet sind und einen Radius aufweisen, der zwischen 4 mm und 7mm liegt, wobei ringförmig ausgebildete Referenzelektroden vorgesehen sind, die die Messelektroden ringförmig umgeben, und wobei die Referenzelektroden im Bereich eines Lotrings angeordnet sind, mit dem die Messmembran und die Zwischenmembran an ihrem Rand umlaufend an dem Grundkörper befestigt sind.

Eine derartig ausgestaltete Messzelle, die beispielsweise als Druckmesszelle eingesetzt werden kann, ermöglicht eine Kompensation eines Thermoschocks auf rein strukturmechanische Weise dadurch, dass zwischen der Messmembran und dem Grundkörper eine zusätzliche Zwischenmembran vorgesehen ist, an der das zweite Messelement angeordnet ist. Eine Druckeinwirkung auf die Messmembran bleibt für die Zwischenmembran ohne Bedeutung, eine Thermoschockeinwirkung auf die Messmembran wird jedoch aufgrund der gegenüber dem Grundkörper geringeren Dicke der Zwischenmembran sehr rasch auf diese übertragen, so dass die beiden Membranen aufgrund ihrer ähnlichen thermischen Masse eine durch den Thermoschock bedingte Verformung der gleichen Art und Größe erfahren. Einflüsse auf einen Spaltabstand, der bei einer kapazitiven Messzelle maßgeblich die Größe der Kapazität und damit die ausgegebenen Druck-Messwerte bestimmt, können so strukturmechanisch kompensiert werden.

Eine von Außen auf die Messmembran wirkende Temperaturänderung bei einem Thermoschock wird auf die zwischen dem Grundkörper und der Messmembran angeordnete Zwischenmembran wesentlich schneller übertragen, so dass die Zwischenmembran eine ähnliche Verformung erfährt wie die Messmembran, wodurch sowohl das erste als auch das zweite Messelement eben diese gleichgerichtete Veränderung erfahren, so dass eine Thermoschock bedingte Messwertänderung vermieden bzw. stark unterdrückt werden kann.

Indem die Messelemente als Messelektroden ausgebildet, erfährt eine durch die Messelektroden gebildete Messkapazität somit bei einem Thermoschock nur geringe Änderungen, da sich sowohl die Messmembran als auch die Zwischenmembran annähernd gleich ausdehnen und damit eine Änderung eines Spaltabstands zwischen den Membranen vermieden werden kann.

Indem die Messelektroden als gleichgroße flächige Metallisierungen ausgebildet sind, wobei die Messelektroden auf der Messmembran und der Zwischenmembran zentrisch angeordnet sind und einen Radius aufweisen, der zwischen 80% und 95% eines Radius der Messmembran liegt, können sie eine möglichst große Kapazität bilden.

Durch eine Anordnung der die Messelektroden ringförmig umgebenden Referenzelektroden im Bereich eines Lotrings, mit dem die Messmembran und die Zwischenmembran an ihrem Rand umlaufend an dem Grundkörper befestigt sind, wird gewährleistet, dass sowohl bei Druck- als auch bei Temperaturänderungen nur eine geringe Kapazitätsänderung einer durch die Referenzelektroden gebildeten Referenzkapazität erfolgt, wodurch eine Normalisierung eines mittels der Messelektroden aufgenommenen Kapazitätswerts möglich ist.

Eine Dicke der Messelektroden bzw. eine Dicke der Metallisierung für die Messelektroden liegt vorzugsweise in einem Bereich von wenigen µm.

Zur separaten Detektion eines Thermoschocks ist es sinnvoll, wenn an zueinander gewandten Flächen der Zwischenmembran und des Grundkörpers weitere Messelemente, beispielsweise Messelektroden, vorgesehen sind, so dass mittels der weiteren Messelemente eine Verformung bzw. Verschiebung der Zwischenmembran relativ zu dem Grundkörper ermittelt werden kann. Es ist dadurch zusätzlich möglich, einen Thermoschock zu detektieren und eine zusätzliche Kompensation des Thermoschocks vorzunehmen.

Zur Anpassung der thermischen Masse der Zwischenmembran und damit die Zwischenmembran unempfindlich auf Druckänderungen im Inneren der Messzelle wird, kann es vorteilhaft sein, die Zwischenmembran mit Vertiefungen oder Aussparungen in Form von Durchbrüchen auszugestalten.

Eine positive Beeinflussung der Thermoschock-Effekte wird erreicht, wenn eine Dicke der Zwischenmembran zwischen 100% und 150% einer Dicke der Messmembran liegt.

Durch die Variation der Lotringbreite zwischen 2 mm und 5 mm kann eine weitere Beeinflussung des Wärmetransportes bzw. der Durchbiegung der Membranen erreicht werden.

Durch eine Variation einer Dicke des Lotrings zwischen 10 und 20 µm kann außerdem erreicht werden, dass die Größe der Mess- und der Referenzkapazität optimal auf eine Detektion eingestellt wird, so dass dadurch Messfehler weniger ins Gewicht fallen.

Eine weitere Möglichkeit Effekte aus einem Thermoschock zu reduzieren besteht darin, dass ein Zwischenraum zwischen der Messmembran und dem Grundkörper mit einem Fluid mit gegenüber Luft erhöhter Temperaturleitfähigkeit, beispielsweise Helium, Wasserstoff, Wasser oder Glyzerin gefüllt ist. Insbesondere wenn es sich bei dem Fluid um eine Flüssigkeit handelt, die ihrer Natur gemäß inkompressibel ist, ist es vorteilhaft, wenn eine Druckausgleichsanordnung, beispielsweise in Form einer über einen Kanal angeschlossenen Druckausgleichsmembran, eines fehlerbelasteten Druckausgleichsbehälters oder eines volumenvariablen Druckausgleichsbehälters vorgesehen ist, um einheitliche Druckbedingungen innerhalb der Messzelle zu gewährleisten.

Die Erfindung wird nachfolgend anhand von Ausführungsbeispielen unter Bezugnahme auf die beigefügten Figuren näher erläutert.

Es zeigen:
- Figur 1a: eine Darstellung einer aus dem Stand der Technik bekannten Zelle mit Zwischenmembran,
- Figur 1b: ein Ausführungsbeispiel einer erfindungsgemäßen Messzelle mit Zwischenmembran und Referenzelektroden,
- Figur 2: eine überhöhte Darstellung der Auswirkungen eines Thermoschocks auf eine herkömmliche Messzelle,
- Figur 3: eine überhöhte Darstellung der Auswirkungen eines Thermoschocks auf eine erfindungsgemäße Messzelle,
- Figur 4: ein Diagramm mit Temperaturverläufen der Messmembran, der Zwischenmembran sowie des Grundkörpers bei einem Thermoschock von 20 auf 80°C,
- Figur 5: einen Vergleich der Auslenkung verschiedener Mess- und Zwischenmembranen,
- Figur 6: einen Vergleich der zeitlichen Entwicklung des maximalen Spaltabstandes bei verschienenen Zwischenmembranen,
- Figur 7: einen Vergleich der Entwicklung der Mess- und der Referenzkapazität einer Messzelle gemäß dem Stand der Technik und einer erfindungsgemäßen Messzelle,
- Figur 8: einen Vergleich der Veränderung der Mess- und der Referenzkapazität bei einer Messzelle gemäß dem Stand der Technik und einer erfindungsgemäßen Zelle, und
- Figur 9: einen Vergleich der Veränderung des Messwertes bei einer Messzelle gemäß dem Stand der Technik und einer erfindungsgemäßen Messzelle.

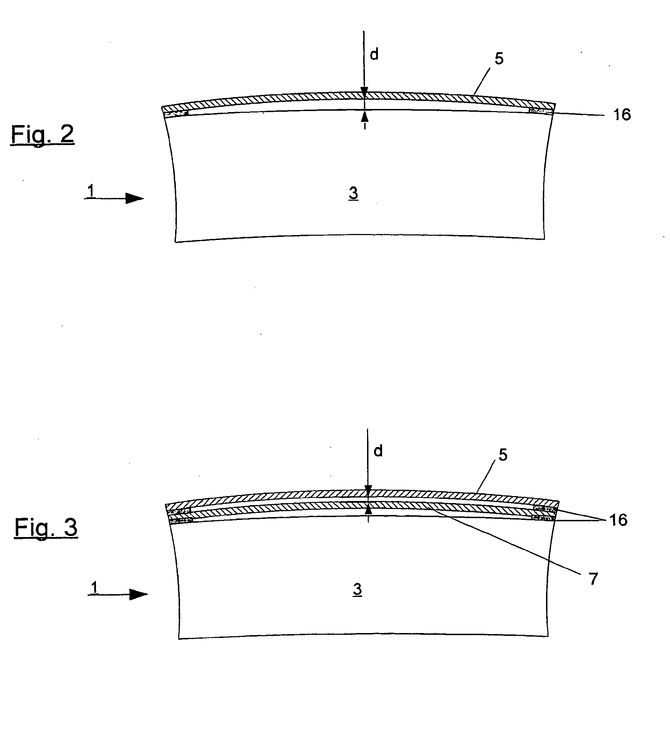

Figur 2 zeigt in einer überhöhten Darstellung die Auswirkungen eines Thermoschocks auf eine Messzelle 1, wie sie aus dem Stand der Technik bekannt ist. Die Messzelle 1 wird in Figur 2 vereinfacht dargestellt und ist aus einem Grundkörper 3 mit einer Messmembran 5 aufgebaut, die über einen Lotring 16 mit dem Grundkörper 3 verbunden ist. Durch den Thermoschock, beispielsweise einen Temperatursprung von 20°C auf 80°C in weniger als einer Sekunde wird durch die unterschiedlichen Temperaturniveaus der Messmembran 5 und des Grundkörpers 3 eine Spannung in die Messzelle 1 eingebracht, so dass sich die Messmembran 5 wie dargestellt nach oben wöbt und damit ein Spaltabstand d zwischen der Messmembran 5 und einer der Messmembran 5 zugewandten Oberseite des Grundkörpers 3 vergrößert wird. Ein derartiger Temperaturschock verändert einen Wert einer Messkapazität C_{M}, die durch in dieser Darstellung nicht gezeigte Messelektroden 10, 11 gebildet ist, durch Veränderung des Spaltabstands d so, dass ein Druckabfall detektiert wird, obwohl keine externe Druckänderung vorliegt. Auf diese Weise entstehen Messfehler, die nur durch aufwendige Kompensationseinrichtungen, beispielsweise mittels Temperatursensoren als Messfehler erfasst und kompensiert werden können.

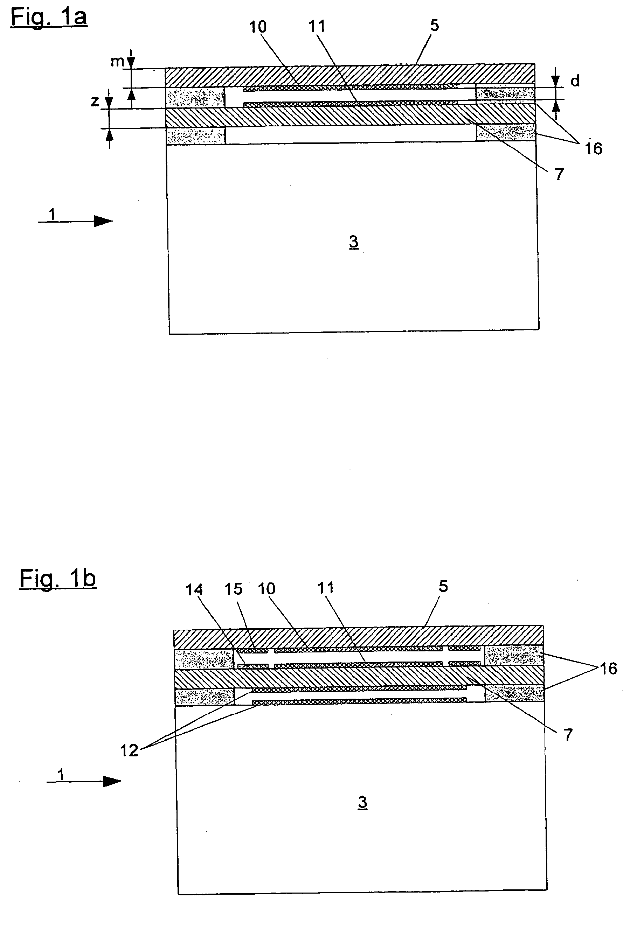

Figur 1A zeigt eine aus dem Stand der Technik bekannte Druckmesszelle 1, die aus einem Grundkörper 3 aufgebaut ist, an dem über Lotringe 16 in einer Art Sandwich-Bauweise eine Zwischenmembran 7 sowie eine Messmembran 5 angeordnet sind. Die Messmembran 5 ist bei Verwendung der Druckmesszelle 1 nach außen gerichtet und verformt sich bei Druckeinwirkungen gegenüber der Zwischenmembran 7 sowie dem Grundkörper 3, so dass sich die Messkapazität C_{M}, die durch an der Messmembran 5 sowie an der Zwischenmembran 7 angeordnete Messelektroden 10, 11 gebildet ist, entsprechend der Druckeinwirkung verändert. Auf diese Weise kann ein von Außen wirkender Druck detektiert und der Größe nach bestimmt werden. Eine Druckeinwirkung auf die Messmembran 5 bleibt für die Zwischenmembran 7, die vorteilhafter Weise mit Durchbrüchen ausgebildet sein kann, ohne Auswirkung, so dass eine Änderung des zwischen der Messmembran 5 und der Zwischenmembran 7 liegende Spaltabstands d und die daraus resultierende Kapazitätsänderung repräsentativ für den einwirkenden Druck ist.

Temperaturänderungen die von Außen her auf die Messmembran 5 einwirken, werden auf die Zwischenmembran 7 aufgrund ihrer gegenüber dem Grundkörper 3 geringeren thermischen Masse wesentlich schneller übertragen, so dass die Messmembran 5 und die Zwischenmembran 7 im Verhältnis zum Grundkörper 3 eine gleich große und gleich schnelle Verformung aufgrund der Temperatureinwirkung erfahren, wodurch der Spaltabstand d zwischen den Messelektroden 10, 11 im Wesentlichen konstant bleibt.

Durch eine geeignete Anpassung der thermischen Masse der Zwischenmembran 7, d. h. durch geeignete Wahl einer Dicke z der Zwischenmembran 7 im Verhältnis zu einer Dicke m der Messmembran 5, sowie durch geeignete Dimensionierung des Spaltabstandes d kann die Empfindlichkeit der Druckmesszelle 1 auf einen Thermoschock weiter reduziert werden. Bei einer Druckmesszelle 1 mit einem Membrandurchmesser von etwa 28 mm wurde festgestellt, dass sehr gute Kompensationsergebnisse erreicht werden, wenn die Dicke z der Zwischenmembran 7 650 µm, das ist etwa das 1,5-fach der Dicke m der Messmembran 5, beträgt. Die optimale Dicke z der Zwischenmembran ist abhängig von den Abmessungen des Lotrings. Der gewählt Spaltabstand d liegt bei einer derartigen Messzelle etwa bei 16 µm, so dass durch geeignet große Dimensionierung der Messelektroden 10, 11 eine Messkapazität im Bereich von 50 pF erreicht werden kann.

Figur 1b zeigt eine erfindungsgemäße Druckmesszelle, wobei einerseits zwischen der Messmembran 5 und der Zwischenmembran 7 ringförmig um die Messelektroden 10, 11 angeordnete Referenzelektroden 14, 15 und andererseits zwischen dem Grundkörper 3 und der Zwischenmembran 7 weitere Messelektroden 12 vorgesehen sind. Durch die im Randbereich innerhalb des Lotrings 16 angeordneten Referenzelektroden 14 wird eine zusätzliche Referenzkapazität C_{R} gebildet, deren Wert sich sowohl bei Druck- als auch bei Temperatureinwirkung aufgrund der Lage zum Lotring 16 nur wenig ändert. Durch die Referenzkapazität C_{R} ist es möglich, einen mittels der Messelektroden 10, 11 ermittelten Wert der Messkapazität C_{M} zu normalisieren, so dass ein dimensionsloser Messwert M erhalten wird.

Durch die zwischen der Zwischenmembran 7 und dem Grundkörper 3 angeordneten weiteren Elektroden 12 ist eine Kapazität zur Detektion eines Thermoschocks, im Folgenden Thermokapazität C_{T} genannt, gebildet. Da zwar eine Druckeinwirkung auf die Messmembran 5 für die Zwischenmembran 7 ohne Auswirkung bleibt, aber eine Temperatureinwirkung von der Zwischenmembran 7 annähernd identisch zur Messmembran 5 aufgenommen wird, kann durch die Thermokapazität C_{T} ein Thermoschock detektiert und somit zusätzlich zur Kompensation durch die Zwischenmembran 7 auch in der weiteren Verarbeitung, beispielsweise durch eine weitere Kompensation, berücksichtigt werden. Auf diese Weise lassen sich die von einer erfindungsgemäß ausgestalteten Messzelle 1 erhaltenen Messwerte M weiter, optimieren.

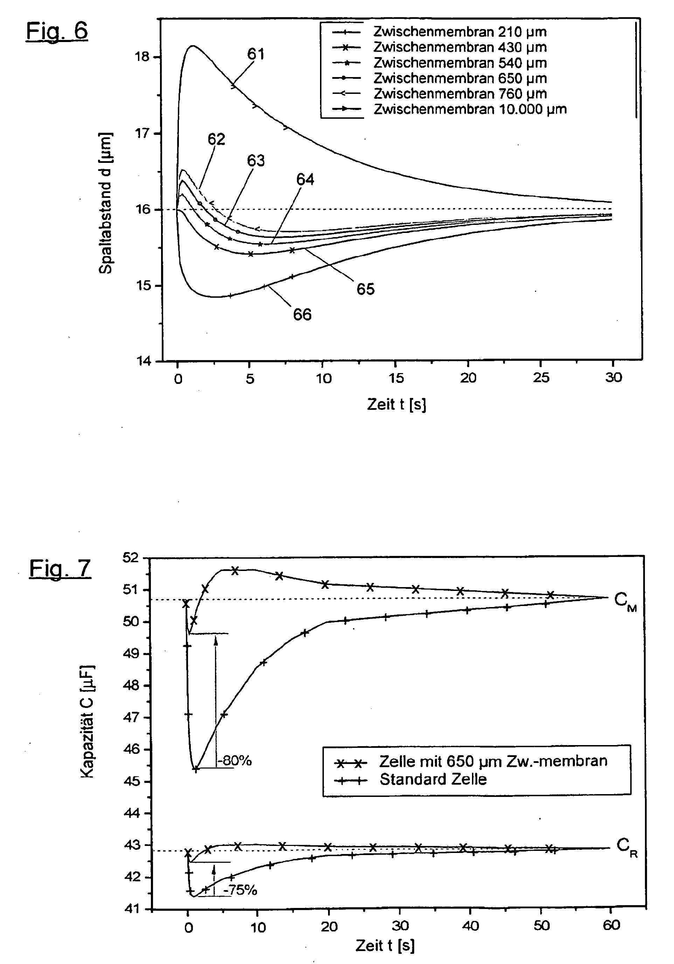

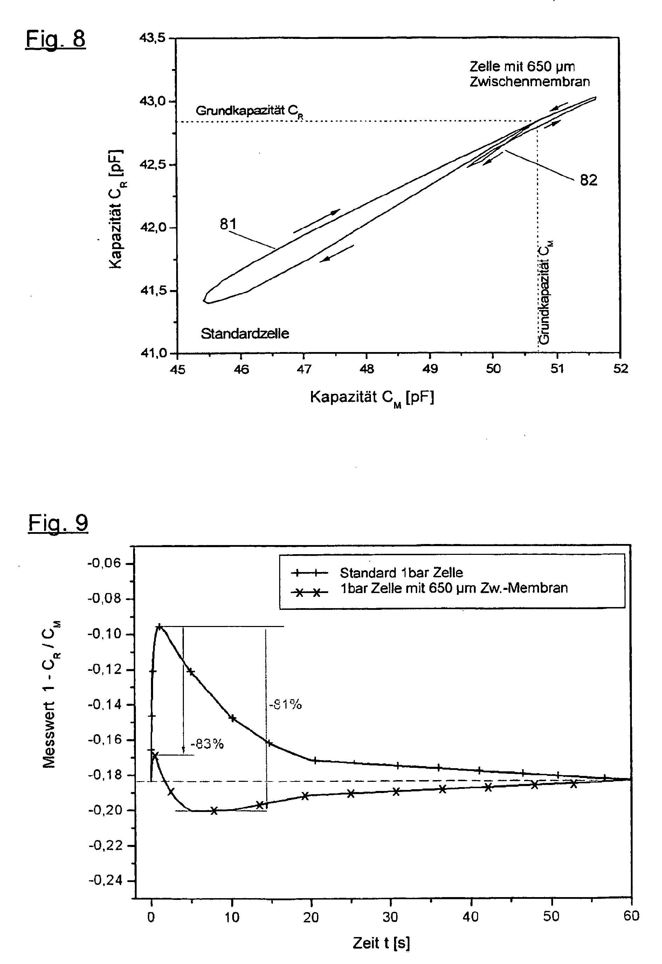

Im Vergleich zu der bereits weiter oben beschriebenen Figur 2 zeigt Figur 3 die Auswirkungen eines Thermoschocks auf eine erfindungsgemäß ausgestaltete Druckmesszelle 1. Wie aus der Darstellung in Figur 3 in Verbindung mit dem Diagramm aus Figur 6 entnommen werden kann, verändert sich der Spaltabstand d zwischen der Messmembran 5 und der Zwischenmembran 7 bei optimaler Auswahl der Dicke z der Zwischenmembran 7 im Verhältnis zur Dicke m der Messmembran 5 nur unwesentlich, so dass wie in Figur 7 gezeigt ist, zum Zeitpunkt einer maximalen Auswirkung des Thermoschocks eine Verbesserung des Werts der Messkapazität C_{M} um bis zu 80% erreicht wird. Wie Figur 7 außerdem entnommen werden kann, wird auch der Wert der Referenzkapazität C_{R} bei einer erfindungsgemäßen Messzelle 1 mit Zwischenmembran 7 weniger beeinflusst, so dass insgesamt, wie dies Figur 9 entnommen werden kann, eine Verbesserung der Messwerte M um bis zu 83% erreicht werden kann.

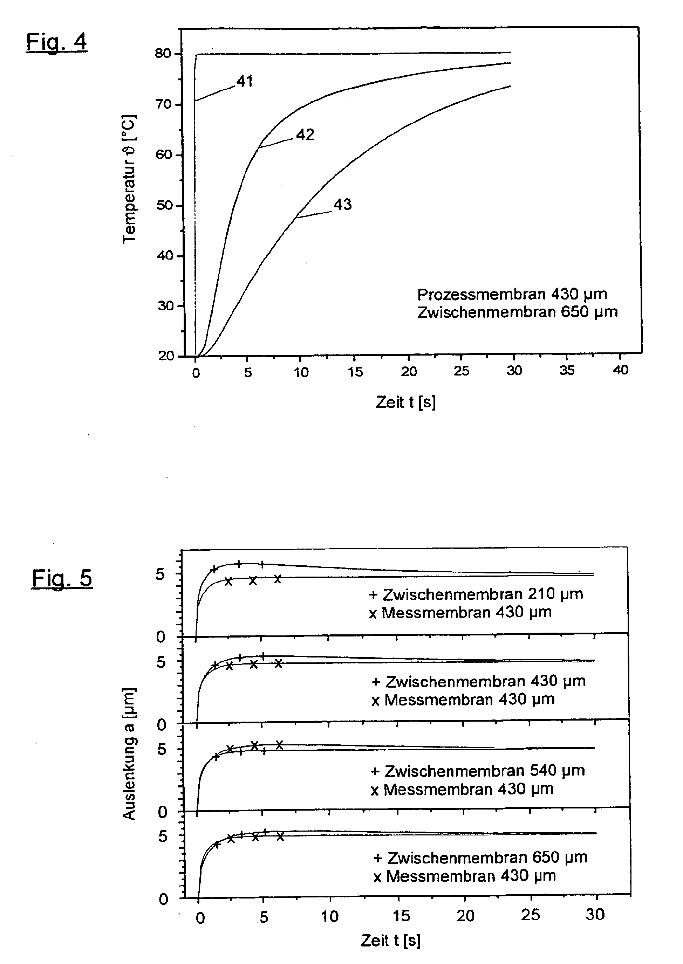

In Figur 4 ist die Veränderung der Temperatur ϑ bei einem Thermoschock von 20°C auf 80°C im Zentrum der Messzelle 1 für die Messmembran 5 in Kennlinie 41, für die Zwischenmembran 7 in Kennlinie 42 sowie für den Grundkörper 3 in Kennlinie 43 dargestellt. Die für diese Auswertung verwendete Messzelle 1 war mit einer Messmembran 5 einer Dicke m = 430 µm und einer Zwischenmembran 7 der Dicke z = 650 µm aufgebaut. Wie der Kennlinie 41 in Figur 4 entnommen werden kann, nimmt die Messmembran 5 einen Temperatursprung von 20°C auf 80°C in etwa einer Sekunde auf und verbleibt dann konstant bei einer Temperatur von 80°C. Im Vergleich zu der relativ langsamen Temperaturaufnahme des Grundkörper 3_(vgl. Kennlinie 43) erreicht die Zwischenmembran 7 eine Temperatur ϑ von 70°C bereits nach etwa 11 Sekunden, wo hingegen der Grundkörper 3 diese Temperatur ϑ erst nach einer Zeit t von etwa 25 Sekunden erreicht. Durch diese wesentlich schnellere Temperaturaufnahme sowie auch durch die Übertragung mechanischer Spannungen von der Messmembran 5 auf die Zwischenmembran 7 wird die Zwischenmembran 7 annähernd identisch mit der Messmembran 5 nach oben ausgelenkt.

Figur 5 zeigt einen Vergleich von 4 Messzellen die jeweils eine Messmembran der Dicke m = 430 µm und Zwischenmembranen mit Dicken z im Bereich von 210 µm bis 650 µm aufweisen. In den Diagrammen der Figur 5 ist eine Auslenkung a der Membranen 5, 7 aus einer Ruheposition a₀ bei einwirken eines Temperaturschocks über der Zeit t dargestellt. Gezeigt ist, wie jeweils die Zwischenmembran 7 im Vergleich zur Messmembran 5 aus ihrer Ruheposition a₀ bei Einwirken eines Temperaturschocks nach oben ausgelenkt wird. Wie Figur 5 entnommen werden kann, wurden die besten Ergebnisse mit einer Zwischenmembran 7 der Dicke z = 650 µm erreicht.

In Figur 6 ist der Spaltabstand d, der sich aus der Differenz der Auslenkungen a der Messmembran 5 und der Zwischenmembran 7 ergibt, im gleichen Zeitmaßstab wie in Figur 5 dargestellt und ermöglicht so einen Vergleich von Zwischenmembranen verschiedener Dicken z. Um einen Vergleich zu Messzellen 1, wie sie aus dem Stand der Technik bekannt sind zu ermöglichen, ist zusätzlich zu den in Figur 5 verglichenen Zwischenmembrandicken z eine Messzelle mit einer Zwischenmembran einer Dicke z von 10.000 µm dargestellt, die in ihrem Verhalten aufgrund der hohen Dicke z sowie der großen thermischen Masse dem Grundkörper 3 der Zelle 1 entspricht. Bei einer Messzelle 1 nach dem Stand der Technik verändert sich der Spaltabstand d, wie es in Kennlinie 61 der Figur 6 dargestellt ist, bei Einwirkung eines Thermoschocks von ursprünglich 16 auf über 18 µm, was eine in Figur 7 dargestellte Schwankung der Messkapazität C_{M} von 50,6 pF auf etwa 45,5 pF zur Folge hat. Die maximale Kapazitätsschwankung bei einer Standardmesszelle beträgt damit etwa - 5,3 pF, d. h. über 10% des tatsächlich gemessenen Kapazitätswerts. Diese Schwankungen können mit einer Zwischenmembran 7 einer Dicke z von beispielsweise z = 650 µm, wie dies mit Kennlinie 63 in Figur 6 verdeutlicht ist, auf etwa +/- 0,4 µm und damit auf eine maximale Kapazitätsschwankung von +/- 1 pF reduziert werden.

In Figur 7 ist außerdem die Schwankung der Referenzkapazität C_{R} einer Messzelle 1 nach dem Stand der Technik sowie eine Messzelle 1 mit einer Zwischenmembran 7 der Dicke z = 650 µm dargestellt. Wie Figur 7 entnommen werden kann, werden auch für die Referenzkapazität C_{R} die Schwankungen durch eine Zwischenmembran 7 erheblich reduziert.

In Figur 8 sind die Änderungen der Messkapazität C_{M} sowie der Referenzkapazität C_{R} gegeneinander aufgetragen. Aus der Kennlinie 81 nach dem Stand der Technik sowie der Kennlinie 82 für eine erfindungsgemäße Messzelle 1 ist ersichtlich, dass eine Änderung des Messwerts M, der aus dem Verhältnis der Messkapazität C_{M} zur Referenzkapazität C_{R} für die erfindungsgemäße Messzelle 1 mit einer 650 µm Ausgleichsmembran in einem wesentlich geringerem Bereich schwankt und im Vergleich zu einer Standardzelle eine größere Linearität aufweist.

Die Auswirkungen auf die von der Messzelle 1 ausgegebenen Messwerte M, die nach der Formel M = 1- C_{R}/C_{M} gebildet werden, sind in Figur 9 dargestellt. Wie aus den Kennlinien in Figur 9 ersichtlich ist, kann durch eine 650 µm-Zwischenmembran die Messwertschwankung bei einem Thermoschock erheblich reduziert werden, so dass eine größere Zuverlässigkeit der von der Messzelle 1 ausgegebenen Messwerte M erreicht wird.

Wie bereits oben angedeutet, ist es außerdem möglich, durch eine Füllung des zwischen der Messmembran 5 und dem Grundkörper 3 gebildeten Zwischenraums mit einem Fluid, das gegenüber Luft eine erhöhte Temperaturleitfähigkeit aufweist, eine schnellere Übertragung thermischer Effekte auf die Zwischenmembran 7 und den Grundkörper 3 zu erreichen, so dass die in den Figuren 4 bis 9 dargestellten Vorgänge durch die schnellere Temperaturübertragung zeitlich gerafft ablaufen. Es wird damit erreicht, dass Auswirkungen eines Thermoschocks nur in einem kürzeren Zeitintervall auf die von der Messzelle 1 ausgegebenen Messwerte M einwirken und so die Gefahr von Messfehlern weiter reduziert wird.

### Bezugszeichenliste

- 1: Druckmesszelle
- 2: Grundkörper
- 5: Messmembran
- 7: Zwischenmembran

- 10: erstes Messelement/Elektrode
- 11: zweites Messelement/Elektrode
- 12: weitere Messelemente
- 14: Referenzelektrode
- 15: Referenzelektrode
- 16: Lotring

- 30: Druckausgleichsmembran

- a: Auslenkung
- a₀: Ruheposition
- aₘ: Auslenkung Messmembran
- a_{z}: Auslenkung Zwischenmembran
- C: Kapazität
- C_{M}: Messkapazität
- C_{R}: Referenzkapazität
- d: Spaltabstand
- e: Dicke der Messelektrode
- m: Dicke der Messmembran
- M: Messwert
- r: Radius
- t: Zeit
- z: Dicke der Zwischenmembran

## Patentansprüche

1. Messzelle mit
- einem Grundkörper (3)
- einer Messmembran (5), die an dem Grundkörper (3) angeordnet ist,
- einer Messeinrichtung, mit einem ersten Messelement (10) und einem zweiten Messelement (11), wobei das erste Messelement (10) an der Messmembran (5) angeordnet ist, wobei
eine Zwischenmembran (7) vorgesehen ist, die zwischen der Messmembran (5) und dem Grundkörper (3) angeordnet ist und an der das zweite Messelement (11) angeordnet ist,
die Messelemente (10, 11) Messelektroden sind, die Messelektroden (10,11) als gleichgroße, flächige Metallisierungen ausgebildet sind und eine Messkapazität C_{M} bilden und die Messelektroden (10, 11) zentrisch angeordnet sind und einen Radius (r) aufweisen, der zwischen 4 mm und 7mm liegt, **dadurch gekennzeichnet, dass** ringförmig ausgebildete Referenzelektroden (14, 15) vorgesehen sind, die die Messelektroden (10, 11) ringförmig umgeben, wobei die Referenzelektroden (14, 15) im Bereich eines Lotrings 16 angeordnet sind, mit dem die Messmembran (5) und die Zwischenmembran (7) an ihrem Rand umlaufend an dem Grundkörper (3) befestigt sind.

2. Messzelle (1) nach Anspruch 1,
**dadurch gekennzeichnet, dass** eine Dicke (a) der Messelektroden (10,11) zwischen 1 µm und 10 µm liegt.

3. Messzelle (1) nach einem der vorhergehenden Ansprüche,
**dadurch gekennzeichnet, dass** an der Zwischenmembran (7) und an dem Grundkörper (3) weitere Messelemente (12) vorgesehen sind.

4. Messzelle (1) nach einem der vorhergehenden Ansprüche,
**dadurch gekennzeichnet, dass** die Zwischenmembran (7) Aussparungen aufweist.

5. Messzelle (1) nach einem der vorhergehenden Ansprüche,
**dadurch gekennzeichnet, dass** eine Dicke (z) der Zwischenmembran (7) im zwischen 100% und 150% einer Dicke (m) der Messmembran (5) liegt.

6. Messzelle (1) nach einem der vorhergehenden Ansprüche,
**dadurch gekennzeichnet, dass** der zwischen der Messmembran (5) und der Zwischenmembran (7) angeordneter Lotring (16) eine Breite zwischen 2 mm und 5 mm aufweist.

7. Messzelle (1) nach Anspruch 6,
**dadurch gekennzeichnet, dass** der Lotring (16) eine Dicke zwischen 10 µm und 20 µm aufweist.

8. Messzelle (1) nach einem der vorhergehenden Ansprüche,
**dadurch gekennzeichnet, dass** ein Zwischenraum zwischen der Messmembran (5) und dem Grundkörper (3) mit einem Fluid mit gegenüber Luft erhöhter Temperaturleitfähigkeit gefüllt ist.

9. Messzelle (1) nach Anspruch 8,
**dadurch gekennzeichnet, dass** eine Druckausgleichsanordnung vorgesehen ist.

## Claims

1. A measuring cell with
- a base body (3),
- a measuring diaphragm (5) which is arranged on the base body (3),
- a measuring device with a first measuring element (10) and a second measuring element (11), wherein the first measuring element (10) is arranged on the measuring diaphragm (5), wherein
an intermediate diaphragm (7) is provided which is arranged between the measuring diaphragm (5) and the base body (3) and on which the second measuring element (11) is arranged,
the measuring elements (10, 11) are measuring electrodes, the measuring electrodes (10, 11) are designed in the form of flat metallized portions of equal size and form a measurement capacity C_{M}, and the measuring electrodes (10, 11) are arranged centrally and have a radius (r) which is between 4 mm and 7 mm, **characterized in that** reference electrodes (14, 15) are provided which are made annular and which surround the measuring electrodes (10, 11) in an annular manner, wherein the reference electrodes (14, 15) are situated in the region of a soldering ring 16 with which the measuring diaphragm (5) and the intermediate diaphragm (7) are fastened to the base body (3) in a continuous manner at their edges.

2. A measuring cell (1) according to claim 1, **characterized in that** a thickness (a) of the measuring electrodes (10, 11) is between 1 µm and 10 µm.

3. A measuring cell (1) according to one of the preceding claims, **characterized in that** further measuring elements (12) are provided on the intermediate diaphragm (7) and on the base body (3).

4. A measuring cell (1) according to any one of the preceding claims, **characterized in that** the intermediate diaphragm (7) has recesses.

5. A measuring cell (1) according to any one of the preceding claims, **characterized in that** a thickness (z) of the intermediate diaphragm (7) is between 100 % and 150 % of a thickness (m) of the measuring diaphragm (5).

6. A measuring cell (1) according to any one of the preceding claims, **characterized in that** the soldering ring (16) arranged between the measuring diaphragm (5) and the intermediate diaphragm (7) has a width of between 2 mm and 5 mm.

7. A measuring cell (1) according to claim 6, **characterized in that** the soldering ring (16) has a thickness of between 10 µm and 20 µm.

8. A measuring cell (1) according to any one of the preceding claims, **characterized in that** an intermediate space between the measuring diaphragm (5) and the base body (3) is filled with a fluid with a thermal diffusivity increased with respect to air.

9. A measuring cell (1) according to claim 8, **characterized in that** a pressure-balancing device is provided.

## Revendications

1. Cellule de mesure comprenant :
- un corps de base (3),
- une membrane de mesure (5) qui est montée sur le corps de base (3),
- un dispositif de mesure comprenant un premier élément de mesure (10) et un second élément de mesure (11), le premier élément de mesure (10) étant situé sur la membrane de mesure (5), dans laquelle
il est prévu une membrane intermédiaire (7) qui est montée entre la membrane de mesure (5) et le corps de base (3) et sur laquelle est monté le second élément de mesure (10),
les éléments de mesure (10, 11) sont des électrodes de mesure,
les électrodes de mesure (10, 11) sont réalisées sous la forme de métallisations planes de mêmes dimensions et forment un condensateur de mesure C_{M}, et les électrodes de mesure (10, 11) sont situées dans une position centrale et comportent un rayon (r) compris entre 4 mm et 7 mm,
**caractérisée en ce qu'**
il est prévu des électrodes de référence annulaires (14, 15) qui entourent annulairement les électrode de mesure (10, 11), les électrodes de référence (14, 15) étant montées dans la zone d'un anneau de brasage (16) par lequel la membrane de mesure (5) et la membrane intermédiaire (7) sont fixées par leurs bords périphériques sur le corps de base (3).

2. Cellule de mesure (1) conforme à la revendication 1,
**caractérisée en ce que**
l'épaisseur (a) des électrodes de mesure (10, 11) est située entre 1 µm et 10 µm.

3. Cellule de mesure (1) conforme à l'une des revendications précédentes,
**caractérisée en ce que**
d'autres éléments de mesure (12) sont prévus sur la membrane intermédiaire (7) et le corps de base (3).

4. Cellule de mesure (1) conforme à l'une des revendications précédentes,
**caractérisée en ce que**
la membrane intermédiaire (7) comporte des évidements.

5. Cellule de mesure (1) conforme à l'une des revendications précédentes,
**caractérisée en ce que**
l'épaisseur (z) de la membrane intermédiaire (7) est située entre 100 % et 150 % de l'épaisseur (m) de la membrane de mesure (5).

6. Cellule de mesure (1) conforme à l'une des revendications précédentes,
**caractérisée en ce que**
l'anneau de brasure (16) monté entre la membrane de mesure (5) et la membrane intermédiaire (7) a une largeur comprise entre 2 mm et 5 mm.

7. Cellule de mesure (1) conforme à la revendication 6,
**caractérisée en ce que**
l'anneau de brasure (16) a une épaisseur comprise entre 10 µm et 20 µm.

8. Cellule de mesure (1) conforme à l'une des revendications précédentes,
**caractérisée en ce que**
le volume intermédiaire situé entre la membrane de mesure (5) et le corps de base (3) est rempli d'un fluide ayant une conductibilité thermique supérieure à celle de l'air.

9. Cellule de mesure (1) conforme à la revendication 8,
**caractérisée en ce qu'**
il est prévu un dispositif d'équilibrage de pression.
